# EUROPEAN PATENT SPECIFICATION

(11) **EP 1 754 524 B1**
(45) Date of publication and mention of the grant of the patent: **30.12.2009**
(21) Application number: 06017170.9
(22) Date of filing: 17.08.2006
(51) Int. Cl.: A63F 13/12, A63G 31/16

(54) **Gaming machine**
Spielgerät
Machine de jeu

(30) Priority: 18.08.2005 JP 2005237962; 04.11.2005 JP 2005321582; 04.11.2005 JP 2005321583
(43) Date of publication of application: 21.02.2007
(73) Proprietor: Aruze Corporation, Tokyo 135-0063 (JP)
(72) Inventor: Okada, Kazuo, Tokyo 135-0063 (JP); Fujimoto, Jun, Tokyo 135-0063 (JP)
(74) Representative: HOFFMANN EITLE

(56) References cited:
- EP-A- 0 479 422
- EP-A- 1 236 488
- WO-A-90/03627
- WO-A-99/56846
- US-A- 4 976 438
- US-A- 5 947 825
- US-B1- 6 220 965

## Description

### 1. Field of the Invention

The present invention relates to a multiplayer-type gaming machine which allows participation of two or more players.

### 2. Description of Related Art

A multiplayer-type gaming machine for business use, commonly named a mass-game machine, is known. A mass-game machine includes, for example, a gaming machine body having a large-scale main display, and terminal devices each having a sub display and mounted on the gaming machine body (see Japanese Patent Unexamined Publication No. 8-206355).

In a mass-game machine disclosed in the above-mentioned document, each terminal device which has a seat for a player to sit on is fixed at a predetermined position on a gaming machine body. A player sits on the seat of the terminal device, and performs various operations while watching a sub display provided to the terminal device. Racehorses and odds for them are displayed on the main display and the sub display. A player selects an arbitrary one of the displayed racehorses, and bets medals on the selected racehorse. Then, on the main display, the racehorses run a race. Depending on a result of the race, medals are paid out on the basis of the predetermined odds. Each terminal device and the gaming machine body are connected via a communication cable so as to exchange game information by means of two-way communication through the communication cable.

A proposed communication-game machine, which is one kind of mass-game machines, not only displays on each sub display a game screen common to all players, but also gives a player further excitement. For example, each terminal device has a camera and a sub display, and the sub display displays a face of another player, to enable a player to see how the opponent looks while playing a game. Alternatively, for example, a communication-game machine that offers a fighting game causes vibration, etc., so that a player bodily experiences the same damage as received by an operative character.

However, the mass-game machine described above causes the following problems. First, even when a party of people intend to participate in the same game together, they have to play the game at separate seats if vacant seats are scattered at that time. Second, although some gaming machines are required to give a player a sense of activeness, none of mass-game machines that are placed in a game arcade, etc., are configured to give such a sense of activeness. Here, examples of the some gaming machines include a gaming machine placed in an amusement park, etc., which makes a player get on a ride that is movable along a track so that the player also moves and in this state operates a gun-like input means in order to shoot a target that is provided on the track, in competition for a score.

US 4,976,438 discloses a multi-player type video game playing system that permits a plurality of players to play and enjoy a game within the common game space. The video game has a cylinder-shaped screen; a plurality of projectors arranged and allocated to project a game scene continuously extending around the entire circumference of the cylindrical screen; a plurality of players' operating sections arranged radially toward the screen; and an image processor for computing a game scene to be projected onto the screen in accordance with input signals from the players' operating sections and a predetermined game program. The image signals representative of the computed game scene are supplied to the projectors to form the game scene continuously extending around the entire circumference of the screen, whereby any one of the players can face and observe a transversely widened game scene covering the entire field of view for that player such that all the players can enjoy the game with increased reality.

WO-A-90/03627 discloses a control system that controls a plurality of interactive travel simulators each comprising an experience generator storing visual data and motion data for the respective simulator, a correlator being provided for updating the visual data for each simulator in accordance with the relative positions of the other simulators in the simulated field of travel.

EP-A-0 479 422 discloses a real time interactive simulator system that involves a plurality of participants that cooperate to interactively achieve a predetermined objective. The system comprises a parallel computer processor and a plurality of video simulators coupled to the parallel processor. Each video simulator comprises an interactive video simulation that is displayed and incorporates selection devices such as joysticks and selection buttons that permit a plurality of participants to individually and cooperatively interact with the video simulation to achieve a predetermined objective. Each of the plurality of participants independently affects the achievement of the objective and the cooperation between participants is determinative of the achievement of the objective.

EP-A-1 236 488 discloses a contents distribution system for a simulation ride system having a seat rocking unit, a video unit, an acoustic unit, and a simulation ride control apparatus. The simulation ride control apparatus has the simulation ride system controlling operations of the seat rocking unit, the video unit, and the acoustic unit by using content data, and a distribution apparatus for a ride contents administration center. The distribution apparatus for the ride contents administration center distributes the content data and the simulation ride control apparatus receives the distributed content data.

US 5,947,825 discloses a multisite multiplayer interactive electronic entertainment system that has a number of cockpits driven by each of several local processors. Each cockpit has a number of high resolution color displays mounted therein, and is mounted on a full motion base. Each cockpit represents a spacecraft in a partially player defined universe. A hub processor connected to each of the several local processors is responsible for maintaining a database of players and player virtual personae, for maintaining a description of a game universe, and for communicating between local processors.

### SUMMARY OF THE INVENTION

According to the present invention, there is provided a gaming machine as set out in claim 1.

The present invention also provides a gaming machine as set out in claim 2.

An embodiment of the present invention provides a gaming machine that allows a terminal device to change its position, and also to provide a terminal device included in the gaming machine.

### BRIEF DESCRIPTION OF THE DRAWINGS

Embodiments will be described in the following description taken in connection with the accompanying drawings in which:
FIG. 1 is a perspective view of an appearance of a gaming machine according to an embodiment of the present invention;
FIG. 2 is a perspective view of an appearance of a terminal device that is included in the gaming machine;
FIG. 3 is an enlarged perspective view of a movement mechanism of the terminal device;
FIG. 4 is a perspective view of a main body of the terminal device whose chair is in a seat mode;
FIG. 5 is a perspective view of the main body of the terminal device whose chair is in a bed mode;
FIG. 6 is a perspective view showing a sub display of the terminal device being taken out of a storage space;
FIG. 7 is a perspective view showing the sub display of the terminal device whose display screen is opposed to a player;
FIG. 8 is a perspective view showing the sub display of the terminal device which has been adjusted into position;
FIG. 9 is a block diagram showing an electrical construction of the gaming machine;
FIG. 10 is a block diagram showing an electrical construction of a main controller of a gaming machine body that is included in the gaming machine;
FIG. 11 is a block diagram showing an electrical construction of a sub controller of the terminal device;
FIG. 12 is a main flowchart of a game program that is executed by the gaming machine;
FIG. 13 is a flowchart showing a game processing that is executed in ST5 of FIG. 12;
FIG. 14 is a flowchart showing processings that are executed in accordance with a selection made by a player during a game;
FIG. 15 is a flowchart showing an encounter processing that is executed at the time when a player encounters another player in a game field;
FIG. 16 is a flowchart showing a macroquest processing;
FIG. 17 is a perspective view of an appearance of the gaming machine, showing a state where a macroquest is occurring in a game field;
FIG. 18 is a perspective view of an appearance of the gaming machine, showing a state where a player who, in the state of FIG. 17, was not yet involved in the macroquest has newly entered the macroquest;
FIG. 19 is a flowchart showing an input data transmission processing that is executed by the terminal device;
FIG. 20 is a flowchart showing a movement signal transmission processing that is executed by the gaming machine body;
FIG. 21 is a flowchart showing a movement mechanism driving processing that is executed by the terminal device;
FIG. 22 is a perspective view of an appearance of a terminal device according to a modification;
FIG. 23 is an enlarged perspective view of a manual controller that is included in the terminal device of FIG. 22; and
FIG. 24 is a block diagram showing an electrical construction of a sub controller of the terminal device of FIG. 22.

### DESCRIPTION OF THE PREFERRED EMBODIMENTS

In the following, a preferred embodiment of the present invention will be described with reference to the accompanying drawings.

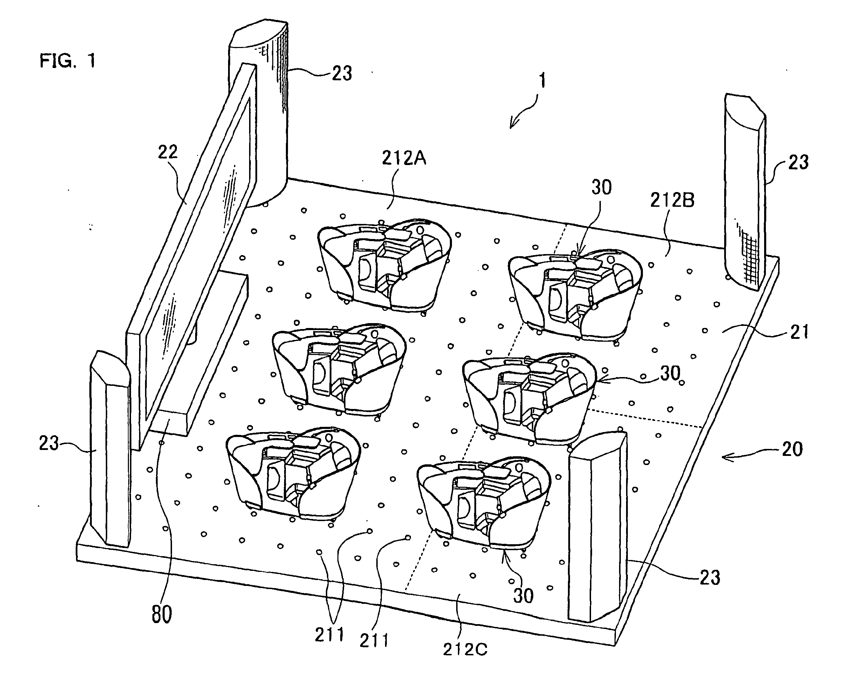

A gaming machine 1 according to an embodiment of the present invention, shown in FIG. 1, is a so-called mass-game machine, and has a gaming machine body 20 and six terminal devices 30. The gaming machine body 20 includes a play area 21 having a rectangular shape in a plan view. The terminal devices 30 are placed in the play area 21.

The gaming machine body 20 also includes, in addition to the play area 21, a main display 22, speakers 23, and a main controller 80. The main display 22 is disposed along one side of the play area 21. The speakers 23 are disposed at four corners of the play area 21. The main controller 80 controls the main display 22 and the speakers 23.

The play area 21 is divided into three sub areas, namely a city area 212A, a sea area 212B, and a forest area 212C. In the play area 21, IC tags 211 are embedded in a grid layout. Information about positioning within the play area 21 is stored in the IC tags 211.

The main display 22 is a large-scale projector that displays an image based on an image data item outputted from the main controller 80. However, the main display 22 is not limited thereto, but may be a large-scale monitor. The main controller 80 is capable of two-way communication with each of the terminal devices 30 through a wireless LAN. The main controller 80 executes a predetermined game program and performs two-way communication with the respective terminal devices 30, thereby providing a virtual space common to players who are using the respective terminal devices 30.

In an initial state, the terminal devices 30 are regularly positioned with their heads facing the main display 22. Each of the terminal devices 30 can move within the play area 21 in accordance with a command from the main controller 80 or in accordance with an operation made by a player who is using the terminal device 30.

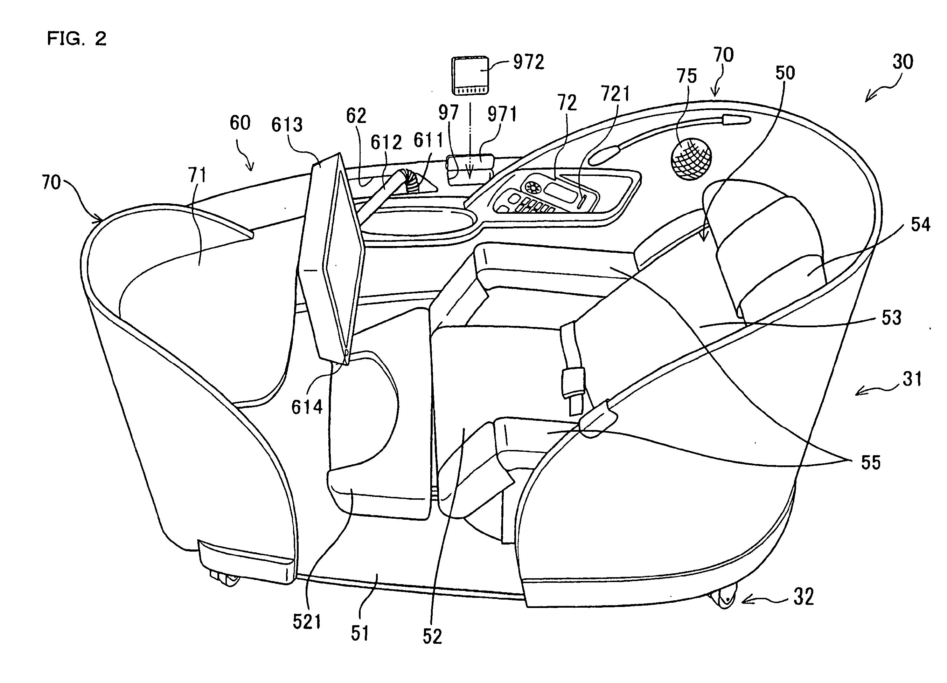

As shown in FIG. 2, the terminal device 30 has a main body 31 and a movement mechanism 32. The movement mechanism 32 is disposed under the main body 31, and moves the terminal device 30 within the play area 21. In FIG. 2, the head of the terminal device 30 faces the left side.

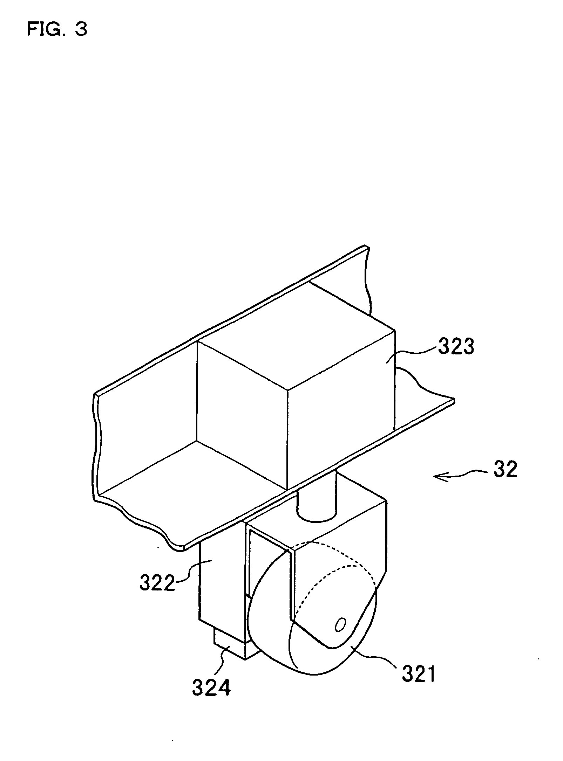

Referring to FIG. 3, the movement mechanism 32 has four tires 321, a drive controller 322, a direction controller 323, a not-shown rechargeable battery, and an IC tag sensor 324. The drive controller 322 drives the tire 321 in rotation. The direction controller 323 controls a direction of the tire 321. The rechargeable battery supplies electric power to the drive controller 322 and the direction controller 323. The IC tag sensor 324 senses the IC tags 211 that are embedded in the play area 21. The drive controller 322 and the direction controller 323 control an operation of the tire 321, thus allowing the terminal device 30 to move to an arbitrary position within the play area 21.

Charging the rechargeable battery may be implemented by connection to an external power source. Alternatively, the play area 21 may have a built-in magnetic field generator which generates a magnetic field, so that a self-induced electromotive force of the magnetic field is used to charge the rechargeable battery.

The main body 31 has a base 51, a pair of large and small shells 70, a side unit 60, and a chair 50. The base 51 has a flat-plate shape. The shells 70 are standing at front and rear ends of the base 51, respectively, so that each of the shells 70 surrounds the main body 31 from three directions. The side unit 60 is disposed so as to stand along one side face of the base 51. The chair 50 is disposed on the base 51, to locate in a space surrounded with the shells 70 and the side unit 60. A side face of the main body 31 opposite to the side unit 60 is partially opened in order that a player can get on and off therethrough.

The chair 50 includes a seat 52, a backrest 53, a pair of sidearms 55, a headrest 54, and a legrest 521. The seat 52 is supported on the base 51 in a movable manner. The backrest 53 is mounted on the seat 52 at a variable angle with the seat 52. The sidearms 55 are provided on both sides of the seat 52 and the backrest 53. The headrest 54 is mounted at a top of the backrest 53. The legrest 521 is mounted at a front end of the seat 52. The chair 50 takes such a position that a player sitting thereon faces toward the head of the terminal device 30, i.e., leftward in FIG. 2.

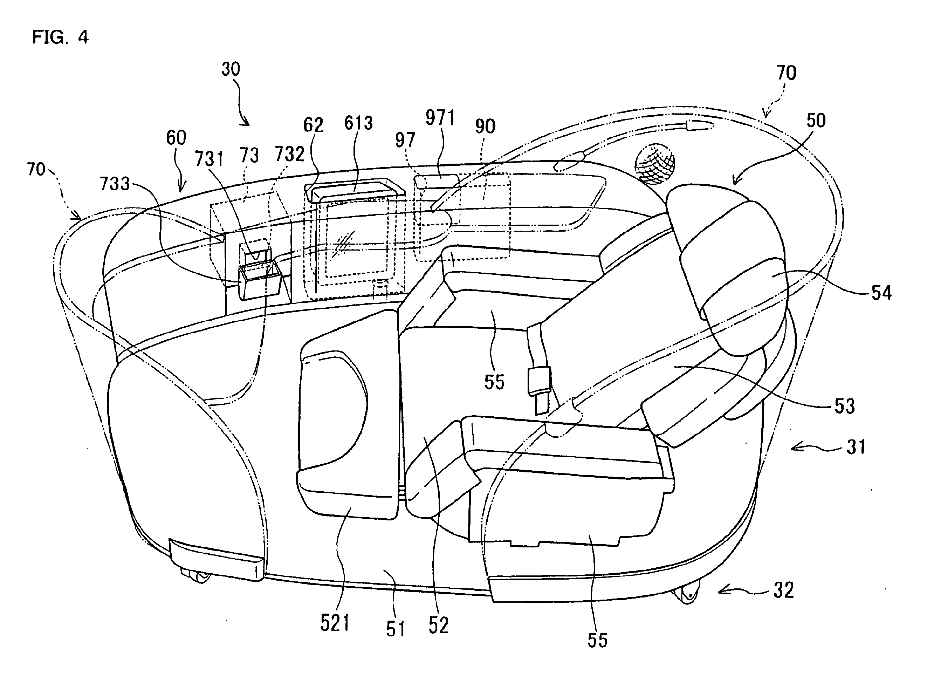

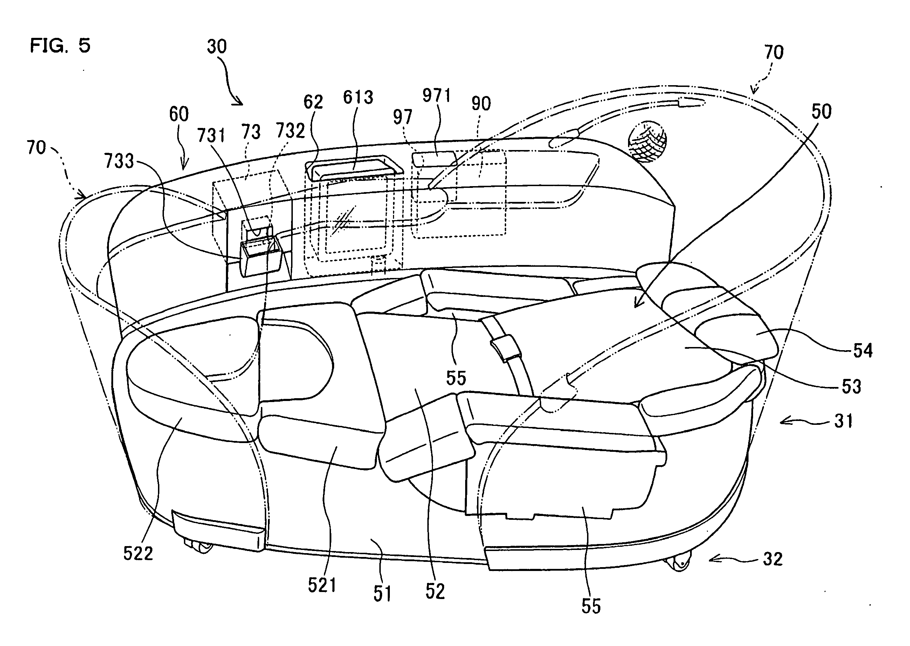

As a player operates an input unit 72, the seat 52 is slid on the base 51 frontward or rearward, which means leftward or rightward in FIG. 2. A mode of the chair 50 is switchable between a seat mode as shown in FIG. 4 and a bed mode as shown in FIG. 5.

By being slid frontward, the seat 52 which is in the seat mode as shown in FIG. 4 gets into the bed mode as shown in FIG. 5 and thus forms a bed. To be more specific, along with frontward sliding of the seat 52, the legrest 521 swings upward so that a surface of the legrest 521 forms a plane continuous with a surface of the seat 52. A footrest 522 is accommodated in a front end of the legrest 521. Along with swinging of the legrest 521, the footrest 522 gets protruding out of the legrest 521, into such a position that its surface forms a plane continuous with the surface of the legrest 521. Along with frontward sliding of the seat 52, the backrest 53 gets falling down rearward, and a front of each sidearm 55 swings slightly upward.

The seat 52, a lower part of the backrest 53 which comes into contact with a waist of a player, and the headrest 54 respectively have built-in bags into which air can be injected. When air is injected into the bag by use of a pump, a surface rises so as to conform to curves of a body of a player.

As shown in FIGS. 4 and 5, the side unit 60 has a storage space 62 that extends in a vertical direction. A sub display 613 having a rectangular shape and implementing a liquid crystal display is stored in the storage space 62.

As shown in FIG. 2, the sub display 613 is supported on the side unit 60 via a first arm 611 and a second arm 612. The first arm 611 is fixed to a face that defines a bottom of the storage space 62, and extends along the vertical direction. The first arm 611 is extendable and retractable in the vertical direction with respect to the side unit 60. The second arm 612 is connected to an upper end of the first arm 611. The second arm 612 is extendable and retractable, and moreover its angle with respect to an axis of the first arm 611 can arbitrarily be changed. The sub display 613 is fixed to an upper end of the second arm 612 at an arbitrary angle with respect to an axis of the second arm 612.

The sub display 613 has a built-in CCD camera 614 of small size. The CCD camera 614 is used in order to create an avatar in a game field. Operating the input unit 72 causes the sub display 613 to display an image that has been taken by the CCD camera 614. This produces more fun because a player can see his/her own face. The image taken may be displayed throughout a whole screen of the sub display 613, or alternatively may be displayed on a part of the screen.

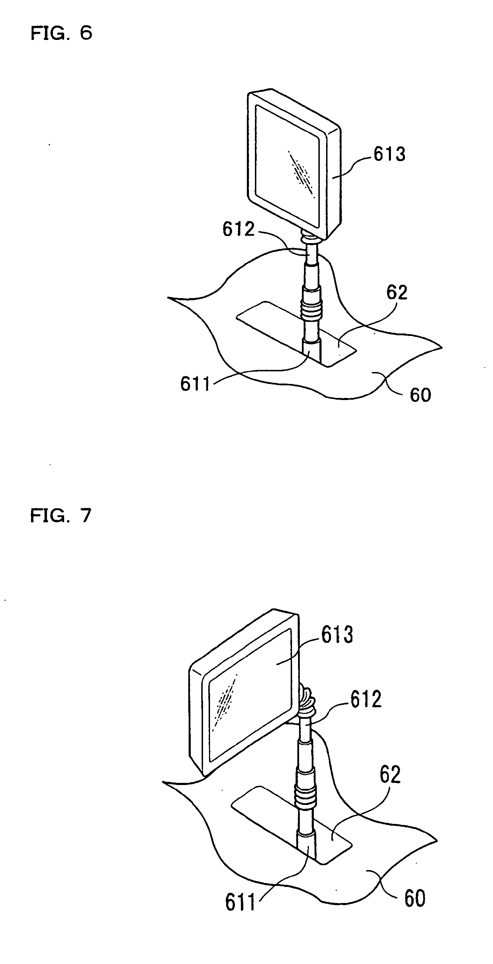

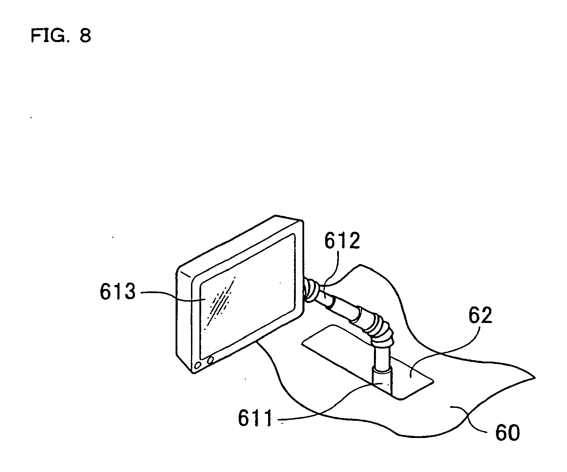

Here, how a player takes the sub display 613 out of the storage space 62 will be described with reference to FIGS. 6, 7, and 8. While sitting in the chair 50, the player firstly holds the sub display 613 that is stored within the storage space' 62, and takes the sub display 613 upward out of the storage space 62, to extend the first arm 611 and the second arm 612 as shown in FIG. 6. Then, the player twists the sub display 613 as shown in FIG. 7 so as to make the screen of the sub display 613 face the player. Then, as shown in FIG. 8, the player adjusts a relative angle between the first arm 611 and the second arm 612, and a relative angle between the second arm 612 and the sub display 613, so that the sub display 613 locates on his/her eye level.

As shown in FIGS. 4 and 5, a sub controller 90 is provided inside the side unit 60. The sub controller 90 is connected to the main controller 80 (see FIG. 1) through a wireless LAN. Based on commands from the main controller 80, the sub controller 90 controls the sub display 613 and the movement mechanism 32, and in addition transmits to the main controller 80 a signal that has been inputted from the input unit 72. The side unit 60 has a slot 97, on the upper side of which an openable and closable covering 971 is provided to close/open the slot 91. As shown in FIG. 2, the covering 971 is opened and a terminal control board 972 is inserted into the slot 97.

Due to the pair of shells 70 and the side unit 60, a player sitting in the chair 50 is kept invisible from another player. The large shell 70 has speakers 75 provided on both sides of the headrest 54. A rear of the large shell 70 extends upward so that it reaches a position higher than the headrest 54 in the seat mode.

There is provided a table 71 that extends from a front of the main body 31 alongside the side unit 60. While the chair 50 is in the bed mode, the footrest 522 is received under a front part of the table 71 (see FIG. 5). The input unit 72 is provided in a portion of the table 71 locating on a side of the sidearm 55, which can be operated by a player who is sitting in the chair 50. The input unit 72 includes a coin insertion slot, a start button, a card slot 721 for insertion of a credit card or a member's card, a keyboard, a jog dial, etc. The input unit 72 may not necessarily be provided in the table 71, but may be provided as a touch panel on the sub display 613.

Inside the side unit 60, a medal reservoir 73 is provided on a front side of the storage space 62. Medals reserved in the medal reservoir 73 are paid out through a medal payout opening 731 and received by a medal receiver 732. The medal receiver 732 has a holder (not shown) that is used for mounting a medal box 733 to the medal receiver 732.

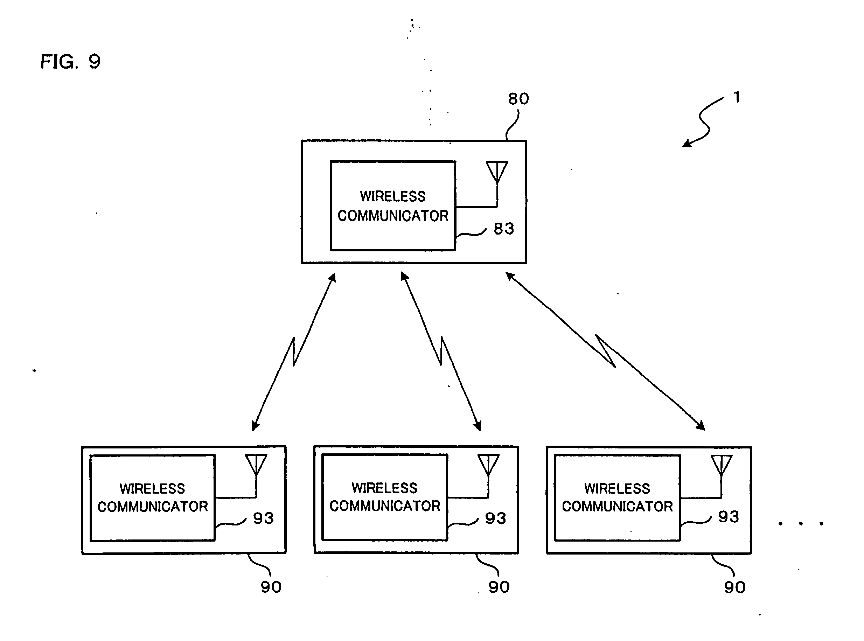

Next, an electrical construction of the gaming machine 1 will be described with reference to FIGS. 9, 10, and 11.

As shown in FIG. 9, the main controller 80 of the gaming machine body 20 has a wireless communicator 83, and the sub controller 90 of each terminal device 30 has a wireless communicator 93. The wireless communicator 83 is capable of two-way communication with each wireless communicator 93 through a wireless LAN, so that a sound data item and a literal data item are transmitted or received between the main controller 80 and the sub controllers 90.

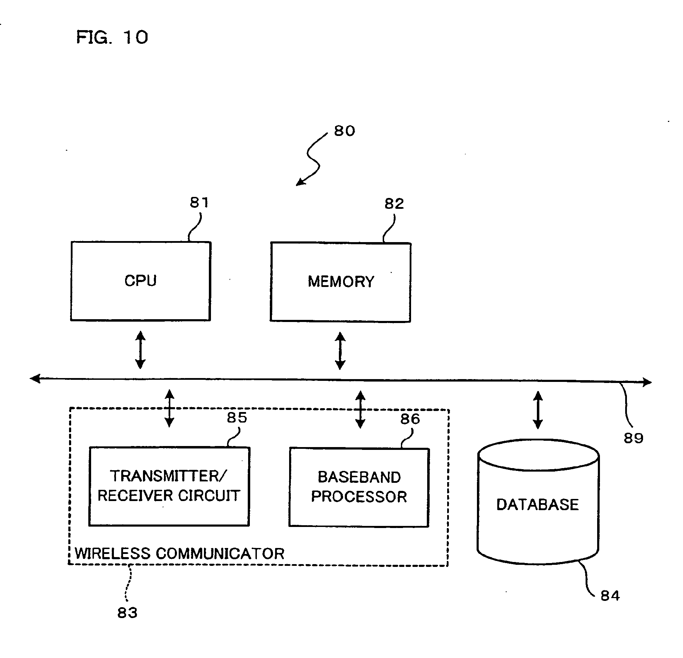

As shown in FIG. 10, the main controller 80 has a CPU 81, a memory 82, the wireless communicator 83, and a database 84, which are respectively connected to a data bus 89. The wireless communicator 83 includes a transmitter/receiver circuit 85 and a baseband processor 86. The transmitter/receiver circuit 85 transmits or receives signals to/from the sub controllers 90. The baseband processor 86 converts a radio-frequency signal that has been received by the transmitter/receiver circuit 85 into a baseband signal, and also converts the baseband signal that is intended to be transmitted into a radio-frequency signal.

The database 84 is a circuit board including a memory in which a game program is stored, or is a memory medium in which a game program is stored such as a hard disk or a ROM cassette. A circuit board or a memory medium which forms the database 84 is removable, and therefore a game program executed by the gaming machine 1 can be replaced if necessary. Replacement of game programs is not necessarily made through a hardware like the above, but may be made by downloading a game program through a communication network.

The CPU 81 transmits or receives data to/from the sub controllers 90 of the respective terminal devices 30 through the wireless communicator 83, in accordance with the following procedure. When transmitting data to the respective sub controllers 90, the CPU 81 converts the data into a packet data item. At this time, the CPU 81 attaches to the packet data item an IP address of the terminal device 30 that is a destination of the packet data item. On receiving data from a sub controller 90 of any of the terminal devices 30, the CPU 81 identifies which terminal device 30 has transmitted the data, based on an IP address attached to the data as a packet data item.

The CPU 81 reads a game program stored in the database 84, out into the memory 82, and executes the game program to thereby progress a game.

To be more specific, the CPU 81 receives from each terminal device 30 data including an input data item and, based on the input data item, generates a single game data item in accordance with the game program. Then, based on the signal game data item, the CPU 81 generates an image data item which is common to all the terminal devices 30, and outputs the image data item to the main controller 80. The single game data item includes data about operative characters, each of which moves within one game field that is generated based on the game program in accordance with an input data item inputted from a corresponding terminal device 30, and also includes position data items for the respective operative characters.

On receiving an input data item from a terminal device 30, the CPU 81 identifies which terminal device 30 has transmitted the input data item, based on an IP address attached to the input data item. Then, based on the input data item, the CPU 81 operates an operative character corresponding to the identified terminal device 30. When a position data item for an operative character corresponding to a terminal device 30 satisfies a predetermined condition, the CPU 81 transmits to the terminal device 30 a movement signal that designates a position of the terminal device 30.

During a game, in accordance with a request from a terminal device 30, the CPU 81 derives from the database 84 a game program, information that indicates a temporary status in a game field, that is, information that indicates an event currently occurring in the game field, and the like. The CPU 81 transmits the derived information to the requesting terminal device 30 through the wireless LAN. The CPU 81 receives from each terminal device 30 information indicating a result of operation made by a player, and stores the information into the memory 82. Based on the information indicating a result of operation made by a player which is stored in the memory 82, the CPU 81 advances the game program, and stores into the database 84 a result of advancing of the game program.

The information indicating a result of operation made by a player means, for example, information indicating a result of a player's selection from options that are given to him/her through the terminal device 30 in accordance with a progress of the game program, information indicating a result of a player's operation on a character that appears in the game, and the like. A current game status of each player, such as high-score information, is stored in the database 84, and can be checked by other players.

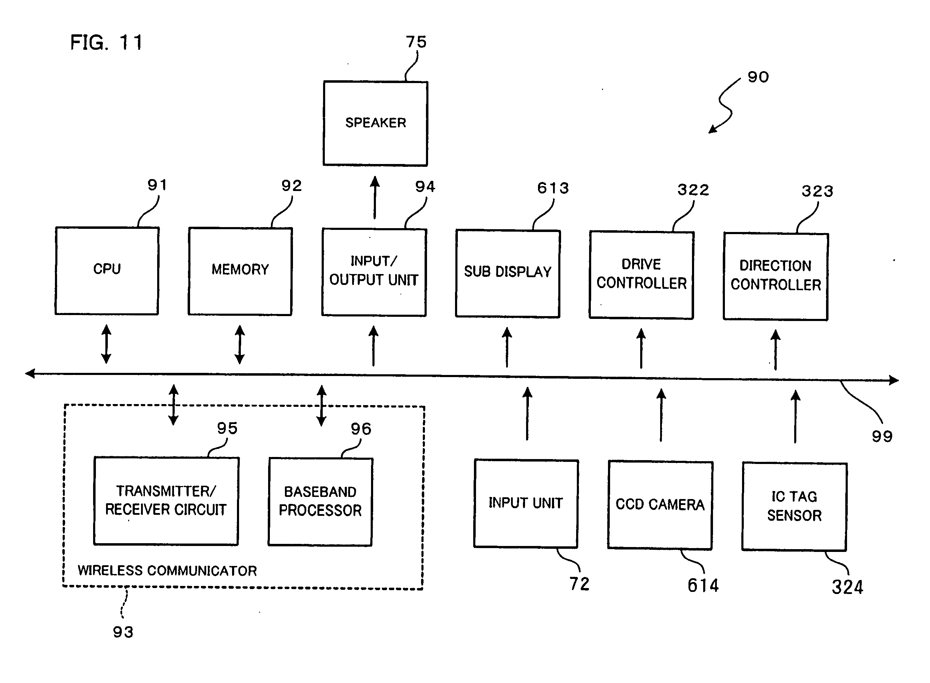

As shown in FIG. 11, the sub controller 90 has a CPU 91, a memory 92, a wireless communicator 93, and an input/output unit 94 that works as an interface between the sub controller 90 and the speakers 75, which are respectively connected to a data bus 99. The wireless communicator 93 includes a transmitter/receiver circuit 95 and a baseband processor 96. The transmitter/receiver circuit 95 transmits or receives signals to/from the main controller 80. The baseband processor 96 converts a radio-frequency signal that has been received by the transmitter/receiver circuit 95 into a baseband signal, and also converts the baseband signal that is intended to be transmitted into a radio-frequency signal.

The CPU 91 transmits or receives data to/from the main controller 80 through the wireless communicator 93, in accordance with the following procedure. When transmitting data to the main controller 80, the CPU 91 converts the data into a packet data item. At this time, the CPU 91 attaches, to the packet data item, an IP address of the terminal device 30 that is transmitting the packet data item. The IP address is an identifier that serves to identify each one of the terminal devices 30. When receiving data from the main controller 80, the CPU 91 determines whether an IP address attached to the data as a packet data item is identical to an IP address of the terminal device 30 to which the CPU 91 belongs. When the IP address attached to the received data is identical to that of the corresponding device 30, the CPU 91 captures the packet data item. When otherwise, the CPU 91 discards the packet data item.

The CPU 91 transmits or receives signals to/from the main controller 80 through the wireless communicator 93, and in addition controls the sub display 613, the drive controller 322, or the direction controller 323 in accordance with an input signal inputted from the input unit 72, the CCD camera 614, or the IC tag sensor 324.

More specifically, the IC tag sensor 324 reads, from the IC tag 211, position information that functions as a current position data item, and outputs the information. The CPU 91 transmits, to the main controller 80, an input data item including data about literal information, specific selection information, etc., which accord with inputs made through the input unit 72, a face image data item for a player which has been imaged by the CCD camera 614, and a current position data item which has been outputted from the IC tag sensor 324.

On receiving from the main controller 80 a movement signal that designates a position of the terminal device 30, the CPU 91 recognizes where in the play area 21 the terminal device 30 locates, based on a current position data item that is outputted from the IC tag sensor 324. Then, the CPU 91 controls the drive controller 322 and the direction controller 323 of the movement mechanism 32, so as to move the terminal device 30 to a position as designated by the movement signal. Moreover, the CPU 91 controls the drive controller 322 and the direction controller 323 of the movement mechanism based on an input data item that is outputted from the input unit 72.

In accordance with a program executed by the CPU 81, the CPU 91 executes an operation program stored in the memory 92, and performs various processings. To be more specific, on receiving from the main controller 80 a game program, information indicating a temporary status in a game field, etc., the CPU 91 stores the game program, the above-mentioned information, etc. into the memory 82. Then, in accordance with the game program stored in the memory 82, the CPU 91 makes the sub display 613 display an event such as various happenings which is currently occurring in the game field, and also makes the speakers 75 output an effect sound.

Each of players who are using the terminal devices 30 operates the input unit 72, while watching game contents that are displayed on the sub display 613 in the form of images, literal information, and the like. Thus, he/she can participate in progress of game by operating a character appearing on the main display 22 or selecting literal options, and also can move the terminal device 30 to a certain position within the play area 21.

Next, a game program that is executed in the gaming machine 1 will be described.

The game program is a program for a role-playing game that is presented in a stage of a virtual game field and constantly progresses along its own time axis. There are towns in the virtual game field, and a guild is created in each of the towns. A player plays a role of an adventurer who visits the towns. The adventurer aims to, by operating an avatar, clear a number of events (i.e., quests) waiting in the respective guilds. In addition, some big events (i.e., macroquests) occur in the game field, to make a general flow of a story. A player gets involved in a macroquest even while clearing quests. The player sometimes cooperates with, sometimes fights against, and sometimes competes with other players in the course of clearing the macroquest.

A flow in the game field changes depending on how the players operate the terminal devices 30. That is, an accumulation of plays made by each one of the players creates a history of the game field. Like this, the game program provides a role-playing game in which all players can experience a flow of a history of a virtual world. In the game field, a history is established along a nonstop time axis of its own. Characters appearing in the game field are neither ageless nor deathless, but getting old like in the real world.

A name of a player who has played an active role, such as clearing a macroquest, winning competition with another player, etc., is written into a chronological table that is stored in the database 84. Therefore, a player who has played an active role in clearing a macroquest has his/her name recorded in the history of the game field.

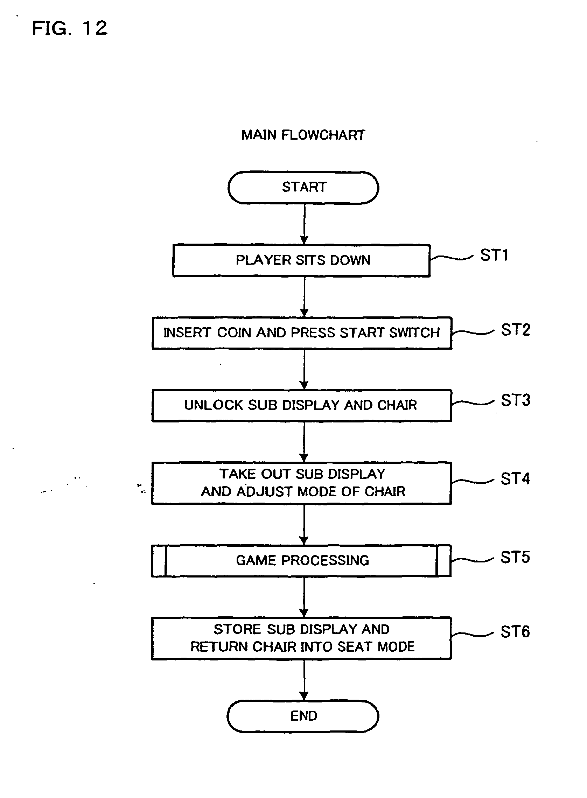

Next, an operation of the gaming machine 1 will be described with reference to FIG. 12.

First, a player chooses favorite one among terminal devices 30 that are placed within the play area 21, and sits in the chair 50 (ST1). Then, the player inserts a coin into the coin insertion slot of the input unit 72, and presses a start switch (ST2). This unlocks the sub display 613 and the chair 50 of the gaming machine 1 (ST3). The player takes the sub display 613 out of the storage space 62 of the side unit 60, and adjusts a mode of the chair 50 (ST4). Then, the gaming machine 1 executes a game processing which will be described later (ST5). When a game comes to an end, the gaming machine 1 makes the sub display 613 stored in the storage space 62, and returns the chair 50 into the seat mode (ST6).

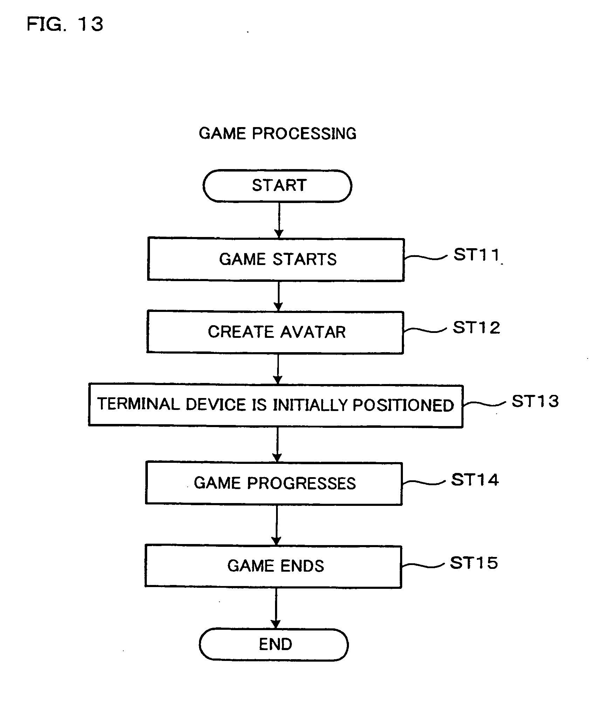

Next, the game processing, which is executed in ST5 of FIG. 12, will be described with reference to FIG. 13.

After a game is started in ST11, the main controller 80 creates an avatar that represents a player in a game field (ST12). More specifically, the CCD camera 614 images a face of a player, and at the same time an avatar-creating screen is displayed on the sub display 613 so that the player inputs through the input unit 72 his/her personal information and a name that will be used in the game field. Based on such information, the main controller 80 creates an avatar, and registers the avatar in the database 84.

Subsequently, the main controller 80 initially positions the terminal device 30, which will be used by the player, in the play area 21 (ST13). Towns existing in the game field are ones surrounded with seas or forests, or may be metropolises or the like. The city area 212A, the sea area 212B, the forest area 212C of the play area 21 (see FIG. 1) are virtual spaces that correspond to environments of respective towns existing in the game field. In ST13, the main controller 80 sets a town of the game field where each player exists, and places a terminal device 30 of each player in one of the sub areas 212A, 212B, and 212C which corresponds to the town where the player exists. Alternatively, the terminal device 30 may be moved in accordance with an operation on the input unit 72 made by each player, and a town of the game field where the player exists may be set along with this movement of the terminal device 30.

Then, the main controller 80 progresses a game along an original time axis while generating a macroquest which will be handled by several players and a quest which will be handled by one player (ST14). Then, the main controller 80 ends the game (ST15).

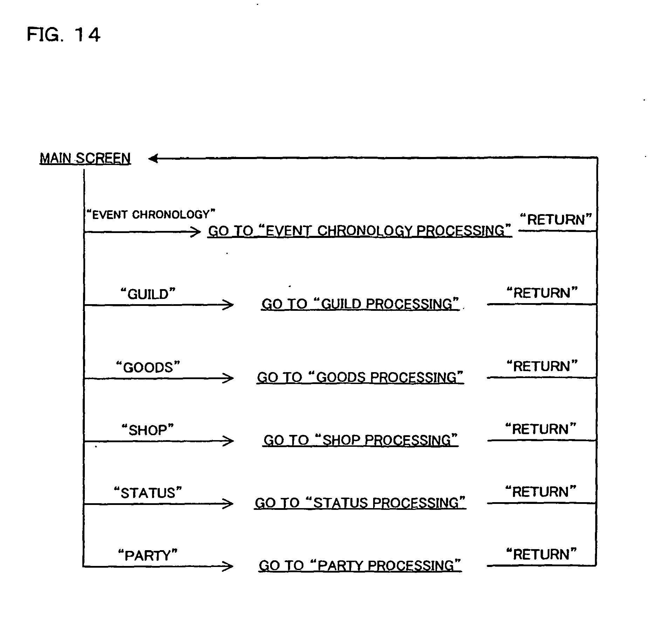

Next, with reference to FIG. 14, a description will be given to respective processings that are, in ST14 of FIG. 13, executed based on selections made by a player. The sub display 613 displays options including "Event Chronology", "Guild", "Goods", "Shop", "Status", and "Party". A player can select any of the options.

When a player selects "Event Chronology", the main controller 80 reads an event chronology out of the database 84, and executes an event-chronology processing to thereby display the event chronology on the sub display 613. The event chronology shows a name of each quest and a date in the time axis of the game field at which each quest was cleared. When the player selects a name of a quest, details of the quest are displayed. Details of the quest mean, for example, a name of a player who has cleared the quest fastest, in a case where a player who has cleared the quest fastest is considered as a winner. Details of the quest mean, alternatively, a name of a party including a maximum number of players among parties which have cleared the quest, in a case where a party including maximum number of players is considered as a winner.

When a player selects "Guild", the main controller 80 executes a guild processing and makes the sub display 613 display a guild screen. The guild screen indicates buttons of "Quest" which can be challenged by the player in the guild, "Another Town" in the game field to go, and the like. When the player selects "Quest", a list of quests selectable is displayed on the sub display 613. When the player selects a desired quest from the list of quests, the selected quest is executed. When the player selects to go "Another Town", a list of towns selectable as a next place is displayed on the sub display 613. When the player selects a desired town from the list of towns, he/she is placed in the town, that is, the main controller 80 moves the terminal device 30 of the player to any of the sub areas 212A, 212B, or 212C that corresponds to the selected town. In the next town as well, the player can select "Guild", "Goods", "Shop", and the like.

When a player selects "Goods", the main controller 80 executes a goods processing and makes the sub display 613 display a goods screen that includes options of goods such as weapons, tools, shoes, etc. When the player selects a good, the main controller 80 makes the sub display 613 display items that are included in the selected good. The player can select an item from the displayed items, to be equipped with or discard the selected item.

When a player selects "Shop", the main controller 80 executes a shop processing and makes the sub display 613 display a shop screen. The shop screen indicates options of "Listen" and "Exchange", which can be selected by a player. When the player selects "Listen", the sub display 613 shows "Rumor", so that the player obtains information about the game field from a shopkeeper. When the player selects "Exchange", the sub display 613 shows a list of goods. When the player selects a desired item from the list of goods, the sub display 613 shows player's items on hand and their values. From the items on hand, the player selects an item for exchange, and selects an "Enter" button, so that items are exchanged.

When a player selects "Status", the main controller 80 executes a status processing and makes the sub display 613 display a status screen. The status screen shows a result of activities the player performed in the game field, to be more specific, particulars such as "Name of Player", "Title", "Fame", "Physical Strength", "Intelligence", "Number of Monsters Defeated", "Number of Quests Cleared", "Number of People Saved", "Goods", and the like. When the player selects any of these particulars, a ranking concerning the selected particular is displayed on the sub display 613.

When a player selects "Party", the main controller 80 executes a party processing and makes the sub display 613 display names of companions, if any. Further, the sub display 613 displays options such as "Read Mail", "Send Mail", "Exchange Items", and "See Status". By selecting any of the options, the player can transmit or receive a mail to/from a companion, exchange items with a companion, see a status of a companion, or the like.

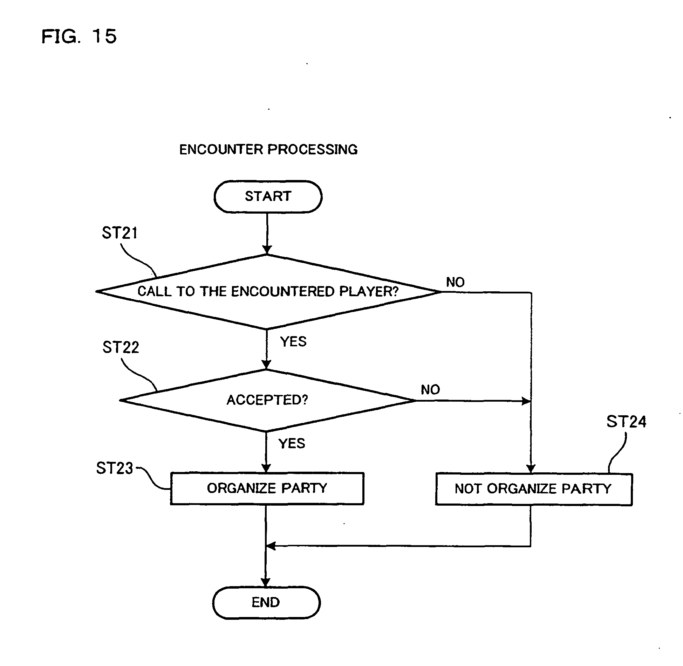

Next, with reference to FIG. 15, a description will be given to an encounter processing that is executed when, in ST14 of FIG. 13, a player encounters another player in the game field.

First, the main controller 80 makes the sub display 613 display an encounter screen so as to advise a player to select whether to speak or not (ST21). When the player selects "No", the processing proceeds to ST24, and the encounter processing ends without organizing a party. When the player selects "Yes", the main controller 80 transmits to the encountered player a mail that informs the encountered player of invitation from a companion player so as to advise, through a sub display 613, the encountered player to select whether to accept the invitation or not.

When the encountered player selects "Yes" (ST22: YES), the main controller 80 makes the sub display 613 of the terminal device 30 of the inviting player display this result. Thereby, a party is organized (ST23), and the encounter processing ends. When the encountered player selects "No" (ST22: NO), the main controller 80 makes the sub display 613 of the terminal device 30 of the inviting player display an unsuccessful result. Then, the processing proceeds to ST24, and the encounter processing ends without organizing a party.

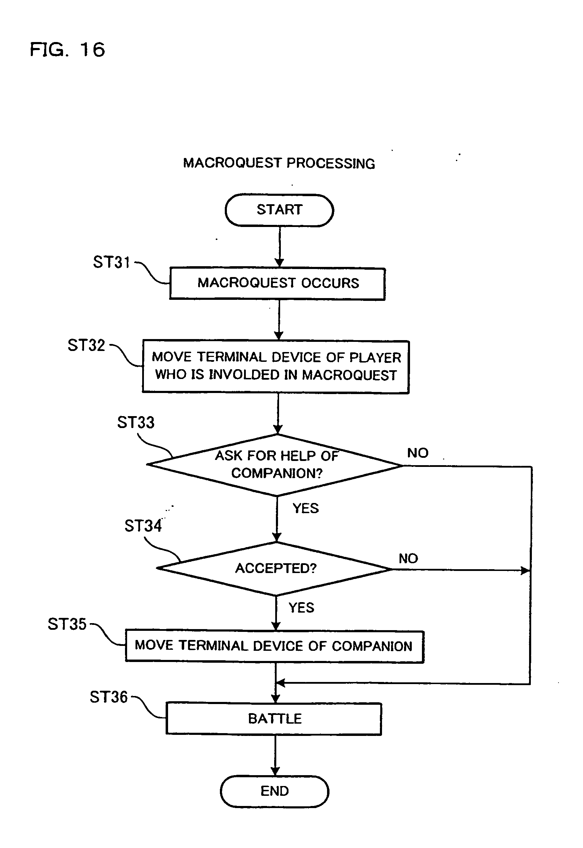

Next, a macroquest processing will be described with reference to FIG. 16.

When a macroquest involving two or more players occurs in the game field (ST31), the main controller 80 makes the main display 22 display players who have been involved in the macroquest, and moves terminal devices 30 of the players who have been involved in the macroquest, to the city area 212A which locates in front of the main display 22. There, terminal devices 30 of opposed players are positioned close to and confronting each other (ST32).

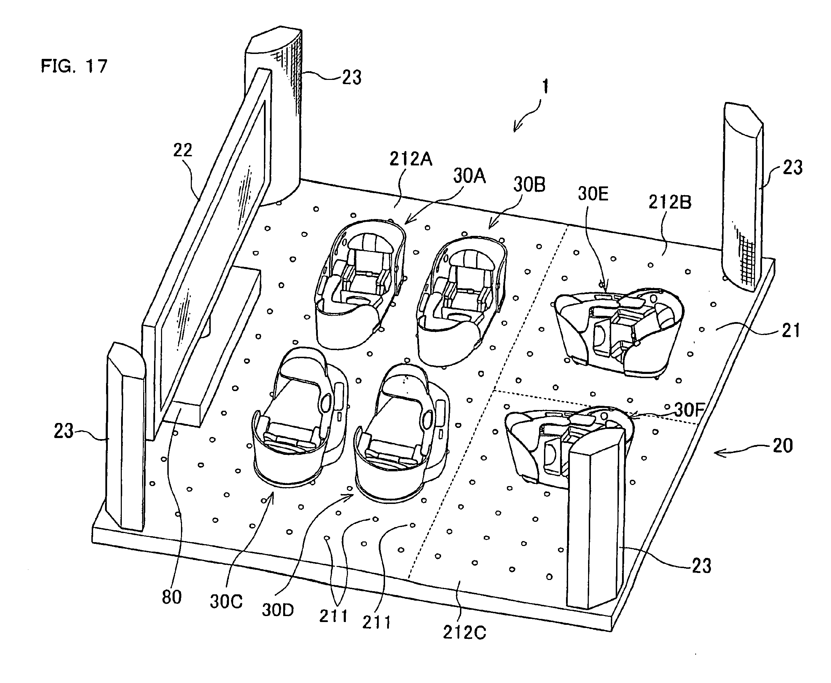

In a specific example, referring to FIG. 17, six terminal devices 30A, 30B, 30C, 30D, 30E, and 30F are placed within the play area 21. Among them, players riding on the terminal devices 30A, 30B, and 30E organize a party, and players riding on the terminal devices 30C, 30D, and 30F organize another party. The players riding on the terminal devices 30A to 30D which locate in the city area 212A are involved in a macroquest, and positioned so as to confront the players of the opposed party. On the other hand, the players riding on the terminal devices 30E and 30F which locate in the sea area 212B and the forest area 212C, respectively, are not involved in the macroquest, and thus watch a battle between the players riding on the terminal devices 30A to 30D.

The player involved in the macroquest selects whether to ask for help from a companion or not in order to clear the macroquest (ST33). When the player selects "No" (ST33: NO), the processing proceeds to ST36. When the player selects "Yes" (ST33: YES), the main controller 80 transmits a mail asking for help to a companion and advises, through the sub display 613, the companion to select whether to help or not.

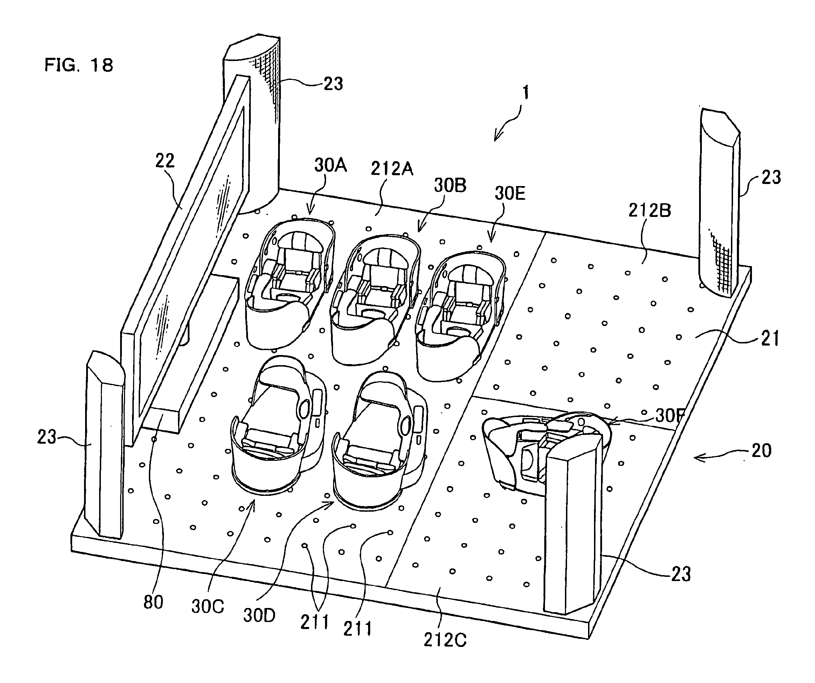

When the companion who has been asked for help selects "Yes" (ST34: YES), the main controller 80 shows, on the sub display 613 of the asking player, that the companion has accepted to help. Thus, the main controller 80 shows on the main display 22 that the companion is gathering, while moving, to the city area 212A, the terminal device 30 of the player who has accepted to help and will newly enter the macroquest. There, terminal devices of opposed players are positioned close to and confronting each other. In a specific example, referring to FIG. 18, the player riding on the terminal device 30E is moved to the city area 212A, because his/her companion player riding on the terminal device 30A or 30B has asked him/her for help and he/she has accepted to help. Thus, the terminal device 30E is positioned in parallel with the terminal devices 30A and 30B, so that the terminal devices 30A, 30B, and 30E confront the opposed terminal devices 30C and 30D.

When the companion who has been asked for help selects "No" (ST34: NO), the main controller 80 shows, on the sub display 613 of the asking player, that the companion has refused to help. Then, the processing proceeds to ST36. More specifically, as shown in FIG. 18, the player riding on the terminal device 30F stays in the forest area 212C, because, although his/her companion player riding on the terminal device 30C or 30D has asked him/her for help, he/she has refused to help.

In ST36, the players fight a battle against the opposed player or the opposed party. More specifically, as shown in FIG. 18, the players riding on the terminal devices 30A, 30B, and 30E fight a battle against the players riding on the terminal devices 30C and 30D, in the city area 212A.

Like this, each player is involved in the macroquest, or asked for help by a companion who has been involved in the macroquest. In clearing the macroquest, a player asked for help can select whether he/she watches a battle between other players or he/she participates in the battle by himself/herself.

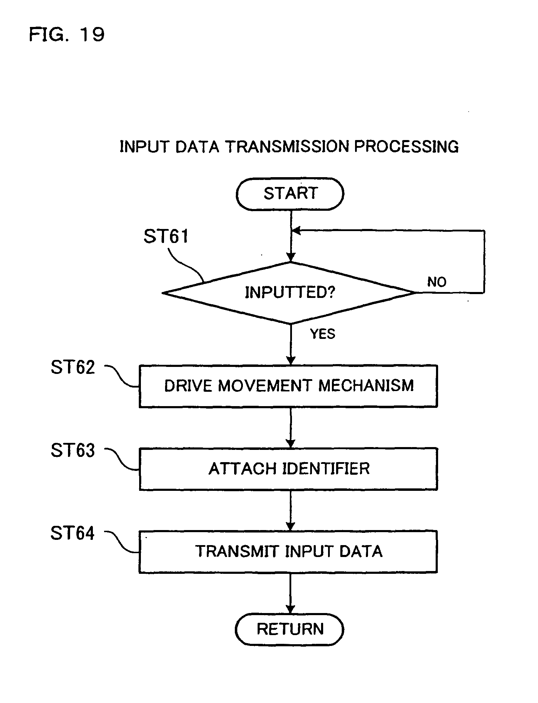

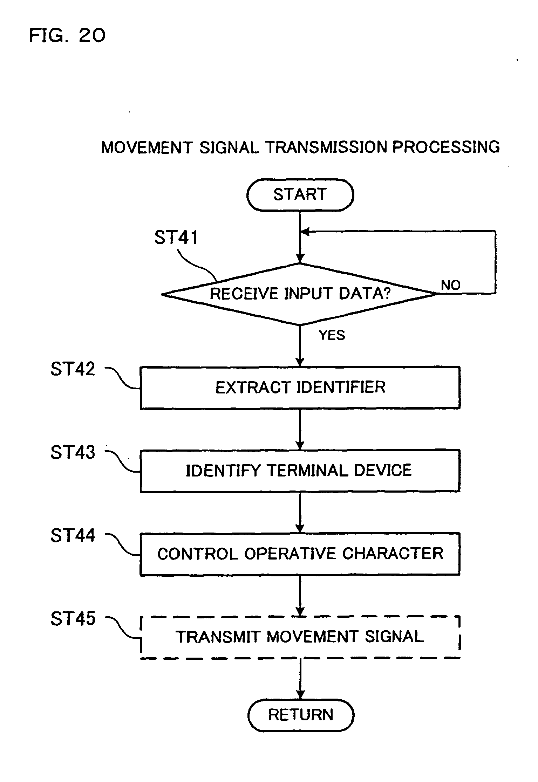

Next, with reference to FIGS. 19 and 20, a description will be given to an example of driving the movement mechanism 32 based on an input made through the input unit 72.

Referring to FIG. 19, the CPU 91 of the terminal device 30 determines whether an input has been made through the input unit 72 or not (ST61). For example, the CPU 91 determines whether a player has operated the input unit 72 in order to move an operative character, or not. When the CPU 91 determines that an input has been made through the input unit 72 (ST61: YES), a direction and a distance of movement, for example, are determined based on the input. Thus, the movement mechanism 32 is driven (ST62). Then, the CPU 91 attaches, to an input data item that is based on the input made through the input unit 72, an identifier that identifies the corresponding terminal device 30, for example, an IP address (ST63). Then, the CPU 91 transmits the input data item thus attached with the identifier, to the main controller 80.

As shown in FIG. 20, the CPU 81 of the main controller 80 determines whether to have received an input data item from any of the terminal devices 30 (ST41). When the CPU 81 determines to have received the input data item (ST41: YES), the CPU 81 extracts an identifier that is attached to the input data item (ST42). Then, based on the identifier, the CPU 81 identifies which terminal device 30 has transmitted the input data item (ST43). Based on the input data item, the CPU 81 makes an operative character corresponding to the identified terminal device 30 move in the game field (ST44). In this example, ST45 is not performed after ST44, that is, the CPU 81 ends the processing without transmitting a movement signal to the identified terminal device 30.

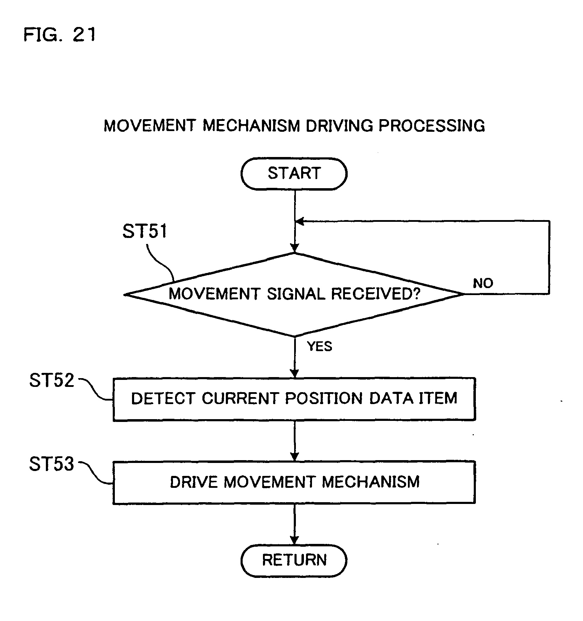

Next, with reference to FIGS. 20 and 21, a description will be given to an example of driving the movement mechanism 32 based on reception of a movement signal from the main controller 80.

When a player using the terminal device 30 makes an input through the input unit 72, the CPU 91 of the terminal device 30 transmits, to the main controller 80, an input data item that is based on the input made through the input unit 72 and that is attached with an identifier such as an IP address. The CPU 81 of the main controller 80 performs the above-described steps ST41 to ST44 shown in FIG. 20, and then transmits, to the terminal device 30 identified in ST43, a movement signal that is attached with an identifier such as an IP address (ST45).

The CPU 91 of the terminal device 30 determines whether to have received a movement signal from the main controller 80 through the wireless communicator 93, or not (ST51). When the CPU 91 determines to have received a movement signal (ST51: YES), the CPU 91 requests the IC tag sensor 324 to read, as a current position data item, position information from the IC tag 211 and to output the information (ST52). Based on the current position data item outputted from the IC tag sensor 324, the CPU 91 drives the movement mechanism 32 while controlling the drive controller 322 and the direction controller 323, so as to move the terminal device 30 to a position that is designated by the movement signal (ST53).

In this embodiment, as thus far described above, each of the terminal devices 30 has the input unit 72 and the movement mechanism 32, and is controlled in such a manner that the movement mechanism 32 is driven in accordance with an input made through the input unit 72 (ST62). Thereby, the terminal device 30 can change its position within the play area 21.

In addition, based on a movement signal transmitted from the main controller 80, the movement mechanism 32 is driven so as to move the terminal device 30 to a predetermined position (ST51 to ST53). Thereby, the terminal device 30 can change its position within the play area 21.

Since a position of the terminal device 30 is changeable like this, players can enjoy a game at favorite positions as they desire, irrespective of contents of the game, for example in a case where a player desires to enjoy a game near his/her friend or in a case where a player desires to take a position that allows him/her to see a real face of an opposed player.

The sub controller 90 of the terminal device 30 attaches to an input data item an IP address that functions as an identifier (ST63), and the main controller 80 of the gaming machine body 20 identifies which terminal device 30 has transmitted the input data item based on the IP address (ST43). This ensures an identification of a terminal device 30, wherever in the play area 21 the terminal device 30 locates.

In addition, since the main controller 80 transmits a movement signal that is attached with an identifier (ST45), an objective terminal device 30 can reliably receive the movement signal transmitted from the gaming machine body 20 wherever in the play area 21 the terminal device 30 locates.

An operation or a position of an operative character existing in the game field is reflected by a position of a terminal device 30 existing in the play area 21. This gives more amusement to a player. As shown in FIG. 18, for example, in a case where several players fight a battle, terminal devices 30 of opposed players are positioned close to and confronting each other, to thereby make the players realize that they are opponents and feel more tense.

Moreover, each of the terminal devices 30 includes the IC tag sensor 324 and, based on a position detected by the IC tag sensor 324, the movement mechanism 32 is driven so as to move the terminal device 30 to a position designated by a movement signal. Thereby, the terminal device 30 can be moved accurately to a position that is designated by the movement signal.

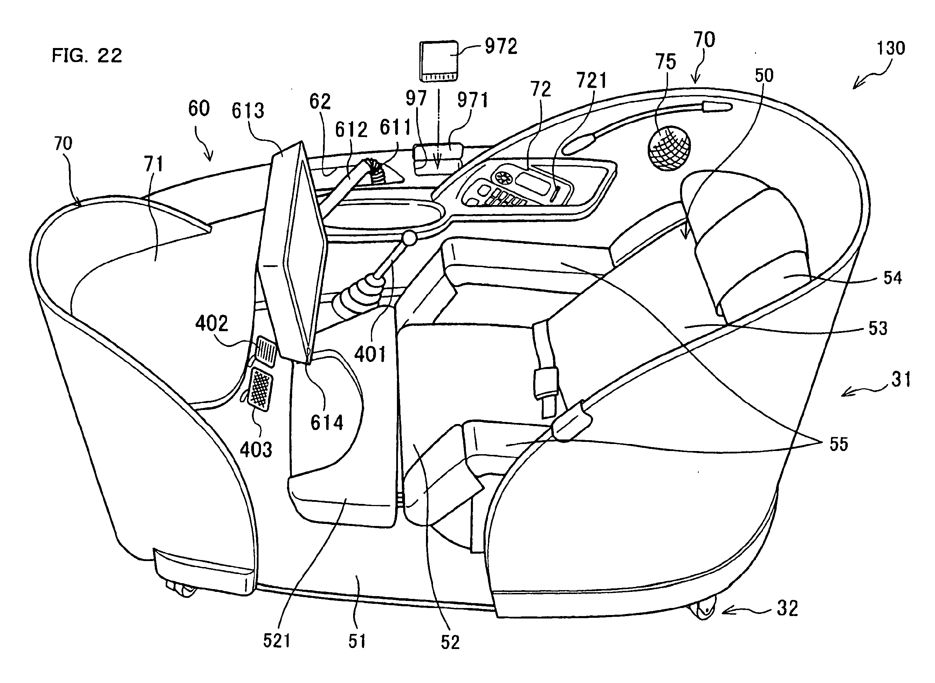

Next, a modification of the terminal device will be described with reference to FIGS. 22, 23, and 24. The terminal device 130 of this modification is one having a manual controller 400 further mounted on the above-described terminal device 30.

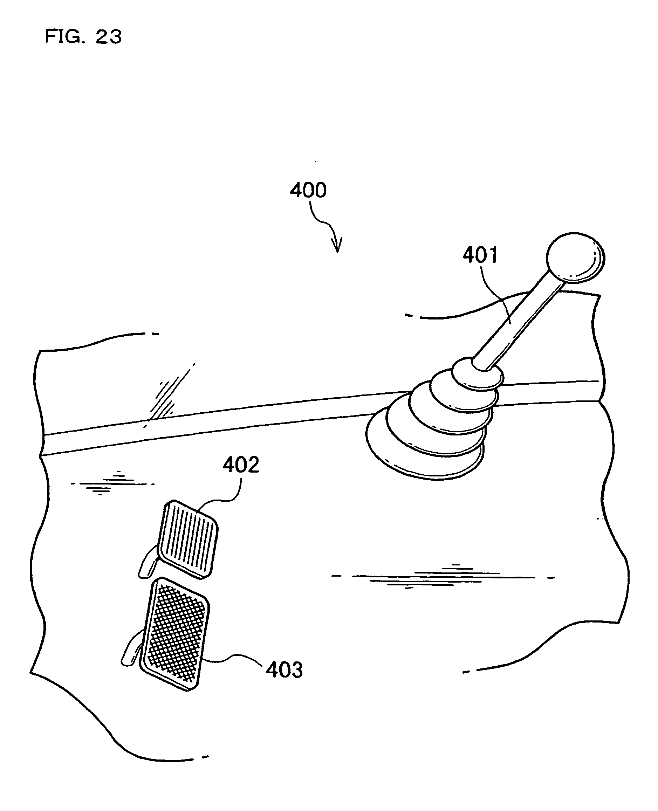

The manual controller 400 allows an input of a command concerning movement of the terminal device 130. As shown in FIGS. 22 and 23, the manual controller 400 includes a direction control lever 401, an accelerator 402, and a brake 403, which are operable by a player sitting in the chair 50. The player can determine in which direction a terminal device 130 he/she is riding on will move by operating the direction control lever 401, and also can adjust a speed of movement of the terminal device 130 by operating the accelerator 402 and the brake 403.

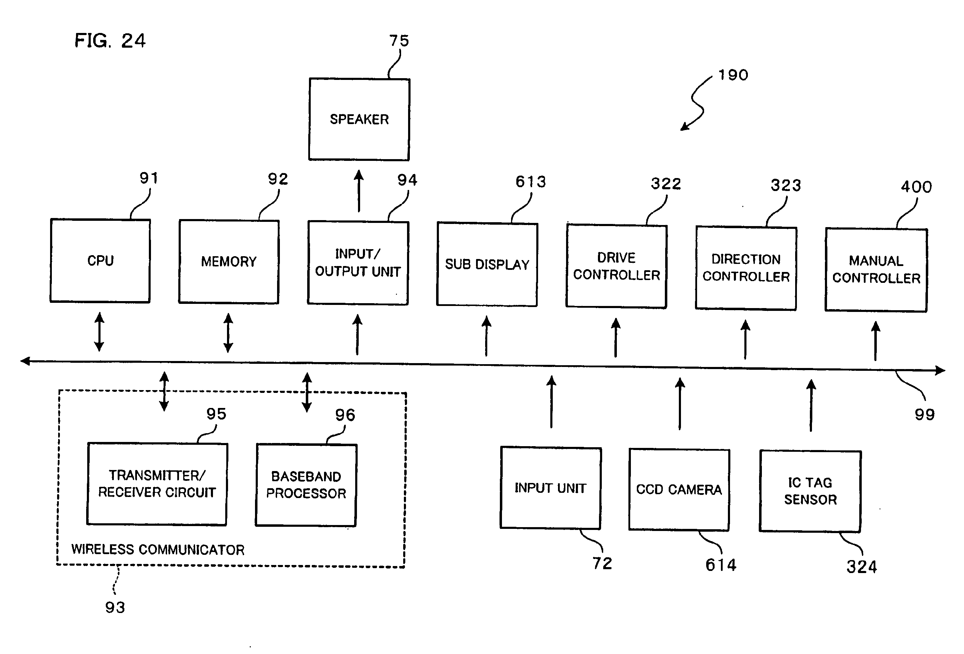

A sub controller 190 of the terminal device 130, shown in FIG. 24, is one having the manual controller 400 further mounted on the above-described sub controller 90. When a player operates the elements 401 to 403 of the manual controller 400, the manual controller 400 outputs data about a movement command. The CPU 91 receives the data, and outputs a signal based on the data to the drive controller 322 and the direction controller 323 thus controlling the movement mechanism 32.

In this modification, a position of the terminal device 130 within the player area 21 can be changed based on an input made through the manual controller 400 by a player.

While this invention has been described in conjunction with the specific embodiments outlined above, it is evident that many alternatives, modifications and variations will be apparent to those skilled in the art. Accordingly, the preferred embodiments of the invention as set forth above are intended to be illustrative, not limiting. Various changes may be made without departing from the scope of the invention as defined in the following claims.

## Claims

1. A gaming machine (1) comprising:
a gaming machine body (20) including a storage means (84) for storing a game program and a main control means (80) for executing the game program;
a plurality of terminal devices (30) each including an input means (72) and a sub control means (90) that is configured for wireless connection to the gaming machine body and that is operable to transmit to the main control means (80) an input data item that is based on an input made through the input means (72); and
a display means (22) for displaying an image based on an image data item outputted from the main control means,
wherein the main control means (80) is operable to receive a plurality of input data items from the terminal devices and, based on the input data items and in accordance with the game program, generate a single game data item based on which the main control means (80) is then operable to generate an image data item that is common to all the terminal devices and output the image data item to the display means (22),
wherein:
the gaming machine body (20) has a play area (21) in which the terminal devices (30) and the display means (22) are placed;
each of the terminal devices (30) has a seat (50) for a player to sit on so that the player sitting thereon is capable of operating the input means (72), and a movement means (32) that is provided below the seat for moving the terminal device within the play area (21);
the sub control means (90) includes a movement control means for driving the movement means based on an input made through the input means so as to make the terminal device (30) move to an arbitrary position in the play area (21), and an identifier attaching means arranged to, when the input data item is being transmitted, attach to the input data item an identifier for identifying each of the terminal devices;
the single game data item includes data about a plurality of operative characters capable of, depending on input data items from the respective terminal devices, operating within a single game field that is generated in accordance with the game program; and
when receiving the input data item from any of the terminal devices (30), the main control means (80) is arranged to identify which terminal device has transmitted the input data item based on the identifier attached to the input data item, and move an operative character corresponding to the identified terminal device within the game field based on the input data item.

2. A gaming machine (1) comprising:
a gaming machine body (20) including a storage means (84) for storing a game program and a main control means (80) for executing the game program;
a plurality of terminal devices (36) each including an input means (72) and a sub control means (90) that is configured for wireless connection to the gaming machine body and that is operable to transmit to the main control means (80) an input data item that is based on an input made through the input means (72); and
a display means (22) for displaying an image based on an image data item outputted from the main control means,
wherein the main control means (80) is operable to receive a plurality of input data items from the terminal devices and, based on the input data items and in accordance with the game program, generate a single game data item based on which the main control means (80) is then operable to generate an image data item that is common to all the terminal devices and output the image data item to the display means (22),
wherein:
the gaming machine body (20) has a play area (21) in which the terminal devices (30) and the display means (22) are placed;
each of the terminal devices (30) has a seat (50) for a player to sit on so that the player sitting thereon is capable of operating the input means (72), and a movement means (32) that is provided below the seat for moving the terminal device to an arbitrary position within the play area (21);
the sub control means (90) includes a movement control means for driving the movement means based on a movement signal from the main control means (80) so as to make the terminal device (30) move to a predetermined position, and an identifier attaching means arranged to, when the input data item is being transmitted, attach to the input data item an identifier for identifying each of the terminal devices;
the single game data item includes position data about a plurality of operative characters capable of, depending on input data items from the respective terminal devices, moving within a single game field that is generated in accordance with the game program;
when receiving the input data item from any of the terminal devices (30), the main control means (80) is arranged to identify which terminal device has transmitted the input data item based on the identifier attached to the input data item and move an operative character corresponding to the identified terminal device within the game field based on the input data item, and in addition the main control means (80) is arranged to transmit a movement signal attached with the identifier to the identified terminal device when position data about the operative character corresponding to the identified terminal device satisfy a predetermined condition.

3. The gaming machine according to claim 2, **characterized in that**:
each of the terminal devices (30) further includes a position detection means (324) for detecting a position in the play area (21) where the terminal device (30) is located;
the movement signal is a signal that designates a position of the terminal device; and
based on a position detected by the position detection means, the movement control means (32) is arranged to drive the movement means so as to make the terminal device (30) move to the position designated by the movement signal.

## Patentansprüche

1. Spielmaschine (1), mit:
einem Spielmaschinenkörper (20) einschließlich einer Speichervorrichtung (84) zum Speichern eines Spielprogramms und einer Hauptsteuervorrichtung (80) zum Ausführen des Spielprogramms;
einer Vielzahl von Endgeräten (30), von denen jedes eine Eingabevorrichtung (72) und eine Untersteuervorrichtung (90) einschließt, die zur drahtlosen Verbindung mit dem Spielmaschinenkörper konfiguriert ist und die betriebsfähig ist, zu der Hauptsteuervorrichtung (80) ein Eingabedatenobjekt zu übertragen, das auf einer Eingabe basiert, die durch die Eingabevorrichtung (72) durchgeführt wird; und
einer Anzeigevorrichtung (22) zum Anzeigen eines Bildes basierend auf einem Bilddatenobjekt, das von der Hauptsteuervorrichtung ausgegeben wird,
wobei die Hauptsteuervorrichtung (80) betriebsfähig ist, eine Vielzahl von Eingabedatenobjekten von den Endgeräten zu empfangen und basierend auf den Eingabedatenobjekten und gemäß dem Spielprogramm ein einzelnes Spieldatenobjekt zu erzeugen, basierend auf dem die Hauptsteuervorrichtung (80) dann betriebsfähig ist, ein Bilddatenobjekt zu erzeugen, das für alle die Endgeräte gemeinsam ist und das Bilddatenobjekt zu der Anzeigevorrichtung (22) auszugeben,
wobei:
der Spielmaschinenkörper (20) einen Spielbereich (21) aufweist, in dem die Endgeräte (30) und die Anzeigenvorrichtung (22) angeordnet sind;
jedes der Endgeräte (30) einen Sitz (50) für einen Spieler aufweist, um darauf derart zu sitzen, dass der Spieler der darauf sitzt, in der Lage ist, die Eingabevorrichtung (72) zu betreiben und eine Bewegungsvorrichtung (32), die unter dem Sitz angeordnet ist, zum Bewegen des Endgerätes innerhalb des Spielbereiches (21);
die Untersteuervorrichtung (90) eine Bewegungssteuervorrichtung zum Antreiben der Bewegungsvorrichtung basierend auf einer Eingabe einschließt, die durch die Eingabevorrichtung durchgeführt wird, um das Endgerät (30) sich zu einer beliebigen Position in dem Spielbereich (21) bewegen zu lassen und eine Identifikatoranhängvorrichtung, die angeordnet ist, wenn das Eingabedatenobjekt übertragen wird, an das Eingabedatenobjekt einen Identifikator zum Identifizieren von jedem der Endgeräte anzuhängen;
das einzelne Spieldatenobjekt Daten über eine Vielzahl von operativen Charakteren einschließt, die in der Lage sind, in Abhängigkeit von Eingabedatenobjekten von den jeweiligen Endgeräten, innerhalb eines einzelnen Spielfeldes zu arbeiten, das gemäß dem Spielprogramm erzeugt wird; und
wenn das Eingabedatenobjekt von einem Beliebigen der Endgeräte (30) empfangen wird, die Hauptsteuervorrichtung (80) angeordnet ist, zu identifizieren, welches Endgerät das Eingabedatenobjekt übertragen hat, basierend auf dem Identifikator, der dem Eingabedatenobjekt angehängt ist und ein operativer Charakter entsprechend dem identifizierten Endgerät innerhalb des Spielfeldes basierend auf dem Eingabedatenobjekt zu bewegen.

2. Spielmaschine (1), mit:
einem Spielmaschinenkörper (20) einschließlich einer Speichervorrichtung (84) zum Speichern eines Spielprogramms und einer Hauptsteuervorrichtung (80) zum Ausführen des Spielprogramms;
einer Vielzahl von Endgeräten (36), von denen jedes eine Eingabevorrichtung (72) und eine Untersteuervorrichtung (90) umfasst, die zur drahtlosen Verbindung mit dem Spielmaschinenkörper konfiguriert ist und die betriebsfähig ist, zu der Hauptsteuervorrichtung (80) ein Eingabedatenobjekt zu übertragen, das auf einer Eingabe basiert, die durch die Eingabevorrichtung (72) durchgeführt wird; und
einer Anzeigevorrichtung (22) zum Anzeigen eines Bildes basierend auf einem Bilddatenobjekt, das von der Hauptsteuervorrichtung ausgegeben wird,
wobei die Hauptsteuervorrichtung (80) betriebsfähig ist, eine Vielzahl von Eingabedatenobjekten von den Endgeräten zu empfangen und basierend auf den Eingabedatenobjekten und gemäß dem Spielprogramm ein einzelnes Spieldatenobjekt zu erzeugen, basierend auf dem die Hauptsteuervorrichtung (80) dann betriebsfähig ist, ein Bilddatenobjekt zu erzeugen, das für alle die Endgeräte gemeinsam ist und das Bilddatenobjekt zu der Anzeigevorrichtung (22) auszugeben,
wobei:
der Spielmaschinenkörper (20) einen Spielbereich (21) aufweist, in dem die Endgeräte (30) und die Anzeigenvorrichtung (22) angeordnet sind;
jedes der Endgeräte (30) einen Sitz (50) für einen Spieler aufweist, um darauf derart zu sitzen, dass der Spieler der darauf sitzt, in der Lage ist, die Eingabevorrichtung (72) zu betreiben und eine Bewegungsvorrichtung (32), die unter dem Sitz angeordnet ist, zum Bewegen des Endgerätes zu einer beliebigen Position innerhalb des Spielbereiches (21);
die Untersteuervorrichtung (90) eine Bewegungssteuervorrichtung zum Antreiben der Bewegungsvorrichtung basierend auf einem Bewegungssteuersignal von der Hauptsteuervorrichtung (80) einschließt, um das Endgerät (30) sich zu einer vorbestimmten Position in dem Spielbereich (21) bewegen zu lassen und eine Identifikatoranhängvorrichtung die angeordnet ist, wenn das Eingabedatenobjekt übertragen wird, an das Eingabedatenobjekt einen Identifikator zum Identifizieren von jedem der Endgeräte anzuhängen;
das einzelne Spieldatenobjekt Positionsdaten über eine Vielzahl von operativen Charakteren einschließt, die in der Lage sind, in Abhängigkeit von Eingabedatenobjekten von den jeweiligen Endgeräten, sich innerhalb eines einzelnen Spielfeldes zu bewegen, das gemäß dem Spielprogramm erzeugt wird; und
wenn das Eingabedatenobjekt von einem Beliebigen der Endgeräte (30) empfangen wird, die Hauptsteuervorrichtung (80) angeordnet ist, zu identifizieren, welches Endgerät das Eingabedatenobjekt übertragen hat, basierend auf dem Identifikator, der dem Eingabedatenobjekt angehängt ist und einen operativen Charakter entsprechend dem identifizierten Endgerät innerhalb des Spielfeldes basierend auf dem Eingabedatenobjekt zu bewegen und zusätzlich die Hauptsteuervorrichtung (80) angeordnet ist, ein Bewegungssignal, das an dem Identifikator angehängt ist, zu dem identifizierten Endgerät zu übertragen, wenn Positionsdaten von dem operativen Charakter entsprechend dem identifizierten Endgerät eine vorbestimmte Bedingung erfüllen.

3. Verfahren nach Anspruch 2, **dadurch gekennzeichnet, dass**:
jedes der Endgeräte (30) weiter eine Positionserfassungsvorrichtung (324) zum Erfassen einer Position in dem Spielbereich (21) einschließt, in dem das Endgerät (30) lokalisiert ist,
das Bewegungssignal ein Signal ist, das eine Position des Endgerätes bestimmt; und
basierend auf einer Position, die durch die Positionserfassungsvorrichtung erfasst wird, die Bewegungssteuervorrichtung (32) angeordnet ist, die Bewegungsvorrichtung derart anzutreiben, um das Endgerät (30) sich zu der Position bewegen zu lassen, die durch das Bewegungssignal bestimmt ist.

## Revendications

1. Machine de jeu (1) comprenant :
un corps de machine de jeu (20) incluant un moyen de stockage (84) pour stocker un programme de jeu et un moyen de commande principal (80) pour exécuter le programme de jeu ;
une pluralité de dispositifs terminaux (30) chacun incluant un moyen d'entrée (72) et un moyen de commande secondaire (90) qui est configuré pour une connexion sans fil avec le corps de machine de jeu et qui peut être mis en oeuvre pour transmettre au moyen de commande principal (80) un élément de données d'entrée qui est basé sur une entrée effectuée par l'intermédiaire du moyen d'entrée (72) ; et
un moyen d'affichage (22) pour afficher une image en se basant sur un élément de données d'image sorti en provenance du moyen de commande principal,
dans laquelle le moyen de commande principal (80) peut être mis en oeuvre pour recevoir une pluralité d'éléments de données d'entrée en provenance des dispositifs terminaux et, en se basant sur les éléments de données d'entrée et selon le programme de jeu, pour produire un élément de données de jeu unique sur la base duquel le moyen de commande principal (80) peut alors être mis en oeuvre pour produire un élément de données d'image qui est commun à tous les dispositifs terminaux et pour sortir l'élément de données d'image vers le moyen d'affichage (22),
dans laquelle :
le corps de machine de jeu (20) a une surface de jeu (21) dans laquelle les dispositifs terminaux (30) et le moyen d'affichage (22) sont placés ;
chacun des dispositifs terminaux (30) a un siège (50) pour qu'un joueur soit assis dessus de sorte que le joueur assis dessus est susceptible de mettre en oeuvre le moyen d'entrée (72), et un moyen de mouvement (32) qui est disposé au-dessous du siège pour déplacer le dispositif terminal à l'intérieur de la surface de j eu (21) ;
le moyen de commande secondaire (90) inclut un moyen de commande de mouvement pour piloter le moyen de mouvement en se basant sur une entrée effectuée par l'intermédiaire du moyen d'entrée de façon à faire en sorte que le dispositif terminal (30) se déplace vers une position arbitraire dans la surface de jeu (21), et un moyen d'attachement d'identificateur agencé pour, lorsque l'élément de données d'entrée est en train d'être transmis, attacher à l'élément de données d'entrée un identificateur pour identifier chacun des dispositifs terminaux ;
l'élément de données de jeu unique inclut des données concernant une pluralité de personnages opérationnels susceptibles, en fonction d'éléments de données d'entrée en provenance des dispositifs terminaux respectifs, de fonctionner à l'intérieur d'un champ de jeu unique qui est produit selon le programme de jeu ; et
lors de la réception de l'élément de données d'entrée en provenance de n'importe lequel des dispositifs terminaux (30), le moyen de commande principal (80) est agencé pour identifier quel dispositif terminal a transmis l'élément de données d'entrée en se basant sur l'identificateur attaché à l'élément de données d'entrée, et pour déplacer un personnage opérationnel correspondant au dispositif terminal identifié à l'intérieur du champ de jeu en se basant sur l'élément de données d'entrée.

2. Machine de jeu (1) comprenant :
un corps de machine de jeu (20) incluant un moyen de stockage (84) pour stocker un programme de jeu et un moyen de commande principal (80) pour exécuter le programme de jeu ;
une pluralité de dispositifs terminaux (36) chacun incluant un moyen d'entrée (72) et un moyen de commande secondaire (90) qui est configuré pour une connexion sans fil avec le corps de machine de jeu et qui peut être mis en oeuvre pour transmettre au moyen de commande principal (80) un élément de données d'entrée qui est basé sur une entrée effectuée par l'intermédiaire du moyen d'entrée (72) ; et
un moyen d'affichage (22) pour afficher une image en se basant sur un élément de données d'image sorti en provenance du moyen de commande principal,
dans lequel le moyen de commande principal (80) peut être mis en oeuvre pour recevoir une pluralité d'éléments de données d'entrée en provenance des dispositifs terminaux et, en se basant sur les éléments de données d'entrée et selon le programme de jeu, pour produire un élément de données de jeu unique sur la base duquel le moyen de commande principal (80) peut alors être mis en oeuvre pour produire un élément de données d'image qui est commun à tous les dispositifs terminaux et pour sortir l'élément de données d'image vers le moyen d'affichage (22),
dans laquelle :
le corps de machine de jeu (20) a une surface de jeu (21) dans laquelle les dispositifs terminaux (30) et le moyen d'affichage (22) sont placés ;
chacun des dispositifs terminaux (30) a un siège (50) pour qu'un joueur soit assis dessus de sorte que le joueur assis dessus est susceptible de mettre en oeuvre le moyen d'entrée (72), et un moyen de mouvement (32) qui est disposé au-dessous du siège pour déplacer le dispositif terminal vers une position arbitraire dans la surface de jeu (21) ;
le moyen de commande secondaire (90) inclut un moyen de commande de mouvement pour piloter le moyen de mouvement en se basant sur un signal de mouvement en provenance du moyen de commande principal (80) de façon à faire en sorte que le dispositif terminal (30) se déplace vers une position prédéterminée, et un moyen d'attachement d'identificateur agencé pour, lorsque l'élément de données d'entrée est en train d'être transmis, attacher à l'élément de données d'entrée un identificateur pour identifier chacun des dispositifs terminaux ;
l'élément de données de jeu unique inclut des données de position concernant une pluralité de personnages opérationnels susceptibles, en fonction d'éléments de données d'entrée en provenance des dispositifs terminaux respectifs, de se déplacer à l'intérieur d'un champ de jeu unique qui est produit selon le programme de jeu ;
lors de la réception de l'élément de données d'entrée en provenance de n'importe lequel des dispositifs terminaux (30), le moyen de commande principal (80) est agencé pour identifier quel dispositif terminal a transmis l'élément de données d'entrée en se basant sur l'identificateur attaché à l'élément de données d'entrée et pour déplacer un personnage opérationnel correspondant au dispositif terminal identifié à l'intérieur du champ de jeu en se basant sur l'élément de données d'entrée, et de plus le moyen de commande principal (80) est agencé pour transmettre un signal de mouvement attaché à l'identificateur au dispositif terminal identifié lorsque des données de position concernant le personnage opérationnel correspondant au dispositif terminal identifié satisfont à une condition prédéterminée.

3. Machine de jeu selon la revendication 2, **caractérisée en ce que :**
chacun des dispositifs terminaux (30) inclut en outre un moyen de détection de position (324) pour détecter une position dans la surface de jeu (21) où le dispositif terminal (30) est situé ;
le signal de mouvement est un signal qui désigne une position du dispositif terminal ; et
en se basant sur une position détectée par le moyen de détection de position, le moyen de commande de mouvement (32) est agencé pour piloter le moyen de mouvement de façon à faire en sorte que le dispositif terminal (30) se déplace vers la position désignée par le signal de mouvement.
